# EUROPÄISCHE PATENTANMELDUNG

(11) **EP 1 112 894 A2**
(43) Veröffentlichungstag der Anmeldung: **04.07.2001**
(21) Anmeldenummer: 00127715.1
(22) Anmeldetag: 18.12.2000
(51) Int. Cl.: B60R 11/02

(54) **Zwischenzeitliche Halterung von Telefonen mit leichter Trennung und einfacher Verbindung**

(30) Priorität: 28.12.1999 DE 19963380
(71) Anmelder: NOKIA MOBILE PHONES LTD., 02150 Espoo (FI)
(72) Erfinder: Gester, Ralf, 40211 Düsseldorf (DE); Thrien, Markus, 45899 Gelsenkirchen (DE)
(74) Vertreter: TER MEER STEINMEISTER & PARTNER GbR

(57) **Zusammenfassung**

Die Erfindung befaßt sich mit der zwischenzeitlichen Halterung von Telefonen 10, insbesondere mit der Ausbildung einer Verriegelungsanordnung, welche nicht nur eine leichte Trennung des Telefons10 von der Halterung 11, sondern gleichzeitig auch eine einfache Verbindungsmöglichkeit zwischen diesen Komponenten schafft.

Hierzu wird angegeben, daß innerhalb des Telefons 10 ein von außerhalb des Telefons 10 betätigungsfähiges Mittel 24,24 angeordnet ist, das in seiner einen Stellung das Telefon 10 an der Halterung 11 arretiert und in seiner anderen Stellung die Trennung von Telefon 10 und Halterung 11 erlaubt. Hierdurch wird gewährleistet, daß große, d.h. die lichten Abmessungen des Telefons 10 übersteigende Halterungen 11 überflüssig sind. Insbesondere durch die Ausbildung der von außerhalb des Telefons 10 betätigungsfähigen, sonst aber innerhalb des Telefons 10 selbst angeordneten Mittel 23, 24 wird erreicht, daß der Griff zum Telefon 10 und die Betätigung der betätigungsfähigen Mittel 23, 24 zur Trennung des Telefons 10 von der Halterung 11 als natürliche Einheit angesehen werden muß.

## Beschreibung

### Technisches Gebiet

Die Erfindung befaßt sich mit der zwischenzeitlichen Halterung von Telefonen, insbesondere mit der Ausbildung einer Verriegelungsanordnung, welche nicht nur eine leichte Trennung des Telefons von der Halterung, sondern gleichzeitig auch eine einfache Verbindungsmöglichkeit zwischen diesen Komponenten schafft.

### Darstellung der Erfindung

Gemäß dem Stand der Technik ist es bekannt, daß Mobiltelefone oder auch schnurlose Telefone zur Aufbewahrung oder zum Laden des Akkusatzes mit einer Halterung verbunden werden. Zur Erfüllung dieses Zwecks sind bekannte Halterungen in aller Regel mit einer Vertiefung versehen, welche das jeweilige Telefon zur Aufbewahrung oder zum Laden aufnimmt. Wird das jeweilige Telefon beispielsweise als Autotelefon betrieben, sind zusätzliche Sicherungsmaßnahmen erforderlich, damit verhindert wird, daß ein in die Halterung eingelegtes Autotelefon bei einem Unfall nicht aus der Halterung geschleudert wird und Verletzungen von Insassen hervorrufen kann. Bekannte Sicherungsmaßnahmen sind beispielweise Schnapphakenverbindungen, die hinter entsprechenden Vorsprüngen verrasten, wenn das Telefon mit der Halterung verbunden ist. Da es sich bei Autotelefonen oftmals um handelsübliche Mobiltelefone handelt und somit trotz der Verwendungsmöglichkeit im Fahrzeug keine Besonderheit aufweisen, sind die Sicherung, die das Mobiltelefon in oder an der Halterung fixieren, ausschließlich an oder innerhalb der Halterung ausgebildet. Stellvertretend hierfür sei nur auf DE-A-199 34 099 hingewiesen..

Wie leicht einzusehen ist, führt die Integration der entsprechenden Sicherungen an oder innerhalb der Halterungen mit einem vermehrten und über die lichten Maße der Mobiltelefone hinausgehenden Platzbedarf bei den Halterungen, was bei der Automobilindustrie -als den Abnehmern solcher Halterungen- zunehmend zu Problemen führt.

Daher liegt der Erfindung die Aufgabe zugrunde eine Halterung für Telefone anzugeben, die eine "crash-sichere" Verbindung zwischen Halterung und Telefon gewährleistet und dabei nicht einen über die lichten Abmessungen des jeweiligen Telefons hinausgehen Platzbedarf erfordert. Außerdem ist es Aufgabe der Erfindung neben der "crash-sicheren" Verbindung sicherzustellen, daß die Einheit leicht bedient werden kann bzw. den natürlichen Greifbewegungen, welche zur Trennung des Telefons von der Halterung bzw. beim Verbinden des Telefons mit der Halterung notwendig sind, angepaßt ist.

### Darstellung der Erfindung

Diese Aufgabe wird mit den Merkmalen gemäß Anspruch 1 gelöst. Vorteilhafte Ausund Weiterbildungen der Erfindung sind den Ansprüchen 2 bis 9 entnehmbar.

Ist innerhalb des Telefons ein von außerhalb des Telefons betätigungsfähiges Mittel angeordnet ist, das in seiner einen Stellung das Telefon an der Halterung arretiert und in seiner anderen Stellung die Trennung von Telefon und Halterung erlaubt, wird gewährleiste, daß große, d.h. die lichten Abmessungen des Telefons übersteigende Halterungen überflüssig sind. Insbesondere durch die Ausbildung der von außerhalb des Telefons betätigungsfähigen, sonst aber innerhalb des Telefons selbst angeordneten Mittel wird erreicht, daß der Griff zum Telefon und die Betätigung der betätigungsfähigen Mittel zur Trennung des Telefons von der Halterung als natürliche, der Greifbewegung angepaßte Einheit angesehen werden muß.

Verletzungsfördernde Kanten werden vermieden, wenn die Kombination gemäß Anspruch 2 ausgebildet ist und die Platte, welche zur Befestigung in eine zur Platte komplementäre Vertiefung eingelegt wird, am Telefons selbst ausgebildet wird. Dies heißt aber nicht, daß die Platte immer mit dem Telefon verbunden sein muß. Vielmehr kann die Platte auch an der Halterung ausgebildet sein. Wird letzteres realisiert, wird eine grundlegende Umgestaltung des selbst Telefons vermieden.

Eine besonders einfache und sichere Verbindung ist dann gegeben, wenn dei Anordnung aus Telefon und Halterung gemäß Anspruch 3 ausgebildet wird. Ist der Überwurf an derjenigen Kante ausgebildet, die im verbundenen Zustand von Telefon und Halterung näher zum Ermittelpunkt liegt, wird sichergestellt, daß beim Trennen der Verbindung das Telefon noch von der Kante gehalten wird, so daß ein herunterfallen ausgeschlossen ist. Stehen gemäß Anspruch 4 die betätigungsfähigen Mittel mit derjenigen Kante in unmittelbarem räumlichen Zusammenhang mit Rasthaken, ist eine besonders einfache Verbindung und Trennung von Telefon und Halterung gegeben. Weist die Halterung bzw. Platte Flachstücke auf, von denen wenigstens ein Flachstück mit Rastmittel versehen ist, kann die Modifikation des Telefons auf Einschnitte im Telefon beschränkt werden, wenn das Telefon mit der Halterung verbunden ist.

Die Kontaktierung des Telefons mit den übrigen Komponenten zur Kommunikation ist dann besonders einfach, wenn gemäß Anspruch 7 an der Halterung und am Telefon zueinander komplementäre elektrische Kontakte ausgebildet sind, die miteinander in körperlichem Kontakt kommen, wenn das Telefon mit der Halterung verbunden wird.

Durch die Ausbildung gemäß Anspruch 8 wird erreicht, daß zumindest die Kontakte am Telefon sehr leicht berührungssicher abgedeckt werden können.

Ist das betätigungsfähige Mittel als mit einem Griffstück versehener Schieber ausgebildet, bestehen wegen des dafür nur geringen Platzbedarfes keine Probleme bei der Integration innerhalb des Telefons.

### Kurze Darstellung der Figuren

Es zeigen:
- Fig. 1 und 1a: jeweils eine Kombination aus Telefon und Halterung;
- Fig. 2: einen Verriegelungsmechanismus;
- Fig. 3: eine weitere Ausführung gemäß Fig.1;
- Fig. 4: eine Schnitt AA gemäß Fig. 5;
- Fig. 5: eine Rückansicht eines Telefons;
- Fig. 6: eine weitere Ausführung gemäß Fig. 1;
- Fig. 7a und 7b: jeweils einen Schnitt;
- Fig. 8: einen Schnitt CC gemäß Fig. 9;
- Fig. 9: eine weitere Ausführung gemäß Fig.5;
- Fig. 10: einen Schnitt durch einen Verriegelungsmechanismus;
- Fig. 11a und 11b: jeweils eine Durchsicht auf eine Scheibe gemäß Fig. 9;
- Fig. 12a und 12b: eine weitere Kombination gemäß Fig. 1 in zwei Darstellungen; und
- Fig. 13: noch eine weitere Einheit gemäß Fig. 1.
Wege zum Ausführen der Erfindung

Die Erfindung soll nun anhand der Figuren näher erläutert werden.

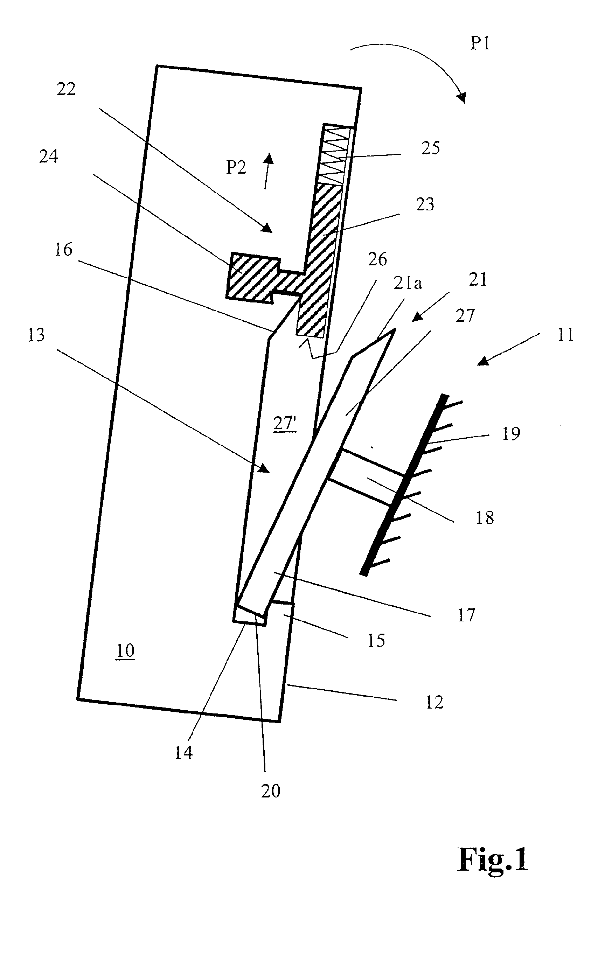

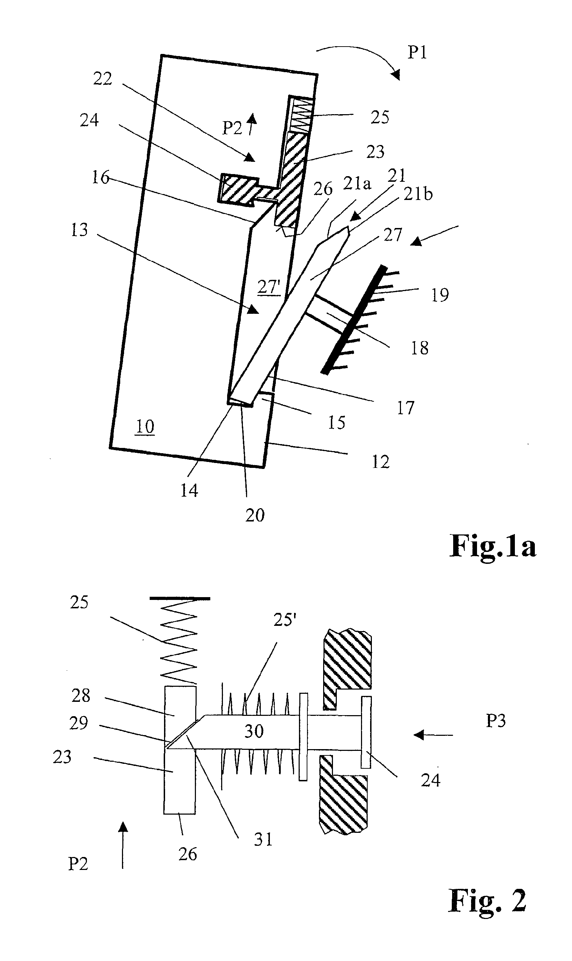

In Fig. 1 sind ein Telefon 10 und eine Halterung 11 in Seitenansicht gezeigt. An der Rückseite 12 des Telefons 10 ist eine Vertiefung 13 ausgebildet, an deren erster Kante 14 ein Überwurf 15 vorhanden ist. Beabstandet durch die Länge der Vertiefung 13 befindet sich die zweite Kante 16 der Vertiefung 13. Wie der Darstellung der Fig. 1 deutlich entnehmbar ist, verläuft die zweite Kante 16 nicht parallel zur ersten Kante 14, sondern unter einem Winkel von etwa 45°.

Die Halterung 11 wird im wesentlichen von einer Platte 17 und einem Steg 18 gebildet, der im vorliegenden Ausführungsbeispiel an einer Wand 19 befestigt ist. Die Platte 17 ist komplementär zur Vertiefung 13 ausgebildet und verfügt daher ebenfalls über eine erste und zweite Kante 20, 21.

Außerdem ist innerhalb des Telefons ein betätigungsfähiges Mittel 22 angeordnet, welches zur besseren Darstellung schraffiert dargestellt ist. Dieses Mittel 22 wird im wesentlichen von einen Schieber 23, einem mit dem Schieber 23 verbundenen Griffstück 24 und einer Feder 25 gebildet. Befindet sich der Schieber 23 in seiner in Fig. 1 gezeigten Ruhelage, ragt dessen unteres Ende 26 in die Vertiefung 13 hinein. Soll nun das Telefon 10 mit der Halterung 11 verbunden werden, ist es notwendig, die erste Kante 20 der Platte 17 mit der ersten Kante 14 der Vertiefung 13 in Verbindung zu bringen. Ist die auch in Fig.1 gezeigte Verbindung zwischen den ersten Kanten 14, 20 hergestellt, muß zur Herstellung der endgültigen Verbindung zwischen Telefon 10 und Halterung 11 das Telefon lediglich mittels einer Klappbewegung in Pfeilrichtung P1 gegen die Halterung 11 gedrückt werden. Kommt bei dieser Klappbewegung die zweite Kante 21 bzw. die Fase 21a der Platte 17 mit dem unteren Ende 26 des Schiebers 23 in körperlichen Kontakt, wodurch die Feder 25 zusammengedrückt wird. Hat die Platte 17 ihre Endlage in der Vertiefung 13 eingenommen, indem die beiden zweiten Kanten 16, 21 in körperlicher Berührung stehen, wird der Schieber 23 durch die Feder 25 entgegen der Pfeilrichtung P2 wieder in seine in Fig. 1 gezeigte Lage zugeführt, wodurch eine Bewegung des Telefons 10 entgegen der Pfeilrichtung P1 gesperrt wird.

Nur der Vollständigkeit halber sei darauf hingewiesen, daß im verbundenen Zustand von Telefon 10 und Halterung 11 auch eine Bewegung des Telefons 10 senkrecht zur Papierebene in Fig. 1 ausgeschlossen ist. Dies wird vorliegend dadurch realisiert, daß im verbundenen Zustand die beiden Seitenflächen 27 der Platte 17 zwischen zwei Wandflächen 27' ruhen, von denen allerdings in Fig. 1 aus Gründen der besseren Darstellbarkeit auf die Darstellung der vorderen Wandfläche 27' verzichtet wurde.

Soll das Telefon 10 wieder von der Halterung 11 getrennt werden, muß zunächst das Griffstück 24, welches von außerhalb des Telefons 10 bedienbar ist, in Pfeilrichtung P2 bewegt werden. Durch diese Bewegung wird gleichzeitig auch der Schieber 23 in Pfeilrichtung P2 bewegt, wodurch die Feder 25 zusammengedrückt wird und das untere Ende 26 des Schiebers 23 die Platte 17 freigibt. Nun kann das Telefon 10 mit einer Klappbewegung entgegen der Pfeilrichtung P1 von der Halterung 11 weggeschwenkt und dann von dieser getrennt werden. Wird anschließend das Griffstück 24 losgelassen, verbringt die Feder 25 den Schieber 23 wieder in seine -in Fig. 1 gezeigte- Ausgangslage zurück.

In Fig. 1a ist eine Anordnung gezeigt, die im wesentlichen der Anordnung gemäß Fig.1 entspricht. Im Gegensatz zur Ausbildung gemäß Fig. 1 ist in Fig. 1a die Kante 21 mit einer weiteren Fase 21b versehen. Diese Fase 21b, die an der Seite der Platte 17 angeordnet ist, die dem Steg 11 zugewandt ist, hat die Aufgabe, das mit der Halterung 11 Telefon 10 auch dann freizugeben, wenn bei nicht betätigtem Griffstück 24 eine Kraft entgegen der Pfeilrichtung P1 wirkt. Dadurch, daß in diesem Fall die Fase 21b den Schieber 23 in Pfeilrichtung P2 bewegt, wird verhindert, daß Beschädigungen auftreten, wenn beispielsweise ohne Kenntnis von der Anordnung versucht wird, daß Telefon 10 von der Halterung 11 abzunehmen. Auch ist der Darstellung gemäß Fig. 1a entnehmbar, daß die Fase 21b im Vergleich zur Fase 21a eine größere Steilheit besitzt. Die geringe Steilheit der Fase 21a stellt sicher, daß zur Verbindung von Telefon 10 und Halterung 11 bzw. während der Einklappbewegung in Pfeilrichtung P1 nur eine geringe Kraft aufgewendet werden muß, während die größere Steilheit der Fase 21b gewährleistet, daß, obwohl die Trennung in der oben beschriebenen Weise möglich ist, nicht jede Erschütterung oder jedes beabsichtige Anstoßen gleich zur Trennung des Telefons 10 von der Halterung 11 führt.

Soll eine in Fig. 1 und 1a gezeigte Schiebebewegung (P2) des Griffstücks 24 vermieden und durch eine bloße Druckbewegung ersetzt werden, bedarf es der in Fig. 2 gezeigten Modifikationen. Auch bei dieser Ausbildung ist ein Schieber 23 vorhanden, auf dessen eines Ende eine Feder 25 wirkt und dessen unteres Ende 26 in Ruhestellung in die Vertiefung 13 des Telefons 10 hineinragt (letzteres ist in Fig.'2 nicht dargestellt). Im Gegensatz zur Ausbildung gemäß Fig. 1 ist bei der Ausbildung gemäß Fig. 2 am Schieber 23 ein Vorsprung 28 ausgebildet, der eine schräge Kante 29 aufweist. Das Griffstück 24 ist mit einer Stange 30 verbunden, welche an ihrem dem Griffstück 24 abgewandten Ende ebenfalls mit einer schrägen Kante 31 versehen ist. Ist eine in Fig. 2 gezeigte Anordnung als Verrieglungsmechanismus in einem Telefon 10 gemäß Fig.1 vorgesehen, verlaufen die Stange 30 und der Schieber 23 rechtwinklig zueinander und die beiden schrägen Kanten 29, 31 liegen aneinander. Wird nun -so wie in Fig. 1 beschrieben- das Telefon 10 mit der Halterung 11 verbunden, wird auch bei einem in Fig. 2 gezeigten Verriegelungsmechanismus das untere Ende 26 des Schiebers 23 in Pfeilrichtung P2 (Fig. 2) bewegt und die Feder 25 zusammengedrückt, wenn das untere Ende 26 des Schiebers 23 mit der zweiten Kante 21 der Platte 17 in körperlichen Kontakt kommt (in Fig. 2 nicht gezeigt). Durch die Bewegung in Pfeilrichtung P2 entfernt sich die schräge Kante 29 des Schiebers 23 etwas von der schrägen Kante 31 der Stange 31 und kommt dann wieder mit dieser in körperlichen Kontakt, wenn die Platte 17 ihre Endlage in der Vertiefung 13 eingenommen hat und die Feder 25 den Schieber 23 durch eine Bewegung entgegen der Pfeilrichtung P2 in seine Ausgangslage zurückgeführt hat. Soll nun ein auf diese Art mit der Halterung 11 verbundenes Telefon 10 wieder von der Halterung 11 getrennt werden, muß lediglich das Griffstück 24, etwa mittels eines Fingerdrucks in Pfeilrichtung P3 bewegt werden. Diese Bewegung bewirkt nämlich, daß die schräge Kante 31 der Stange 30 durch ihren körperlichen Kontakt mit der schrägen Kante 29 des Schiebers 23 diesen in Pfeilrichtung P2 bewegt und somit die in der Vertiefung 13 des Telefons 10 ruhende Platte 17 freigibt. Ist dann das Telefon 10 durch eine im Zusammenhang mit Fig. 1 erläuterte Bewegung entgegen der Pfeilrichtung P1 von der Halterung 11 getrennt worden und wirkt keine Kraft mehr auf das Griffstück 24, wird der Schieber 23 durch die Feder 25 wieder in seine in Fig. 2 gezeigte Ausgangslage zurückgeschoben sowie durch den körperlichen Kontakt der beiden schrägen Kanten 29, 31 die Stange 31 entgegen der Pfeilrichtung P3 bewegt.

Nur der Vollständigkeit halber sei darauf hingewiesen, daß die weitere in Fig. 2 gezeigt und um. die Stange 30 herum angeordnete Feder 25' lediglich die Wirkung der Feder 25 beim Zurückschieben der Stange 30 entgegen der Pfeilrichtung P3 unterstützt und in einem anderen -nicht dargestellten- Ausführungsbeispiel auch gänzlich entfallen kann.

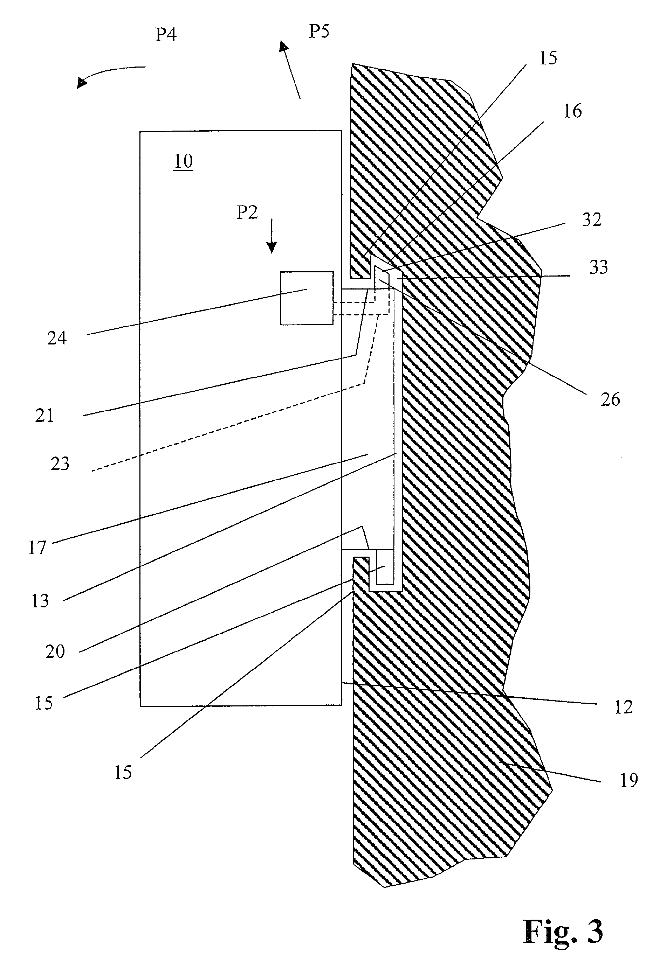

Das im Zusammenhang mit Fig. 3 gezeigt Ausführungsbeispiel unterscheidet sich von den Ausführungsbeispielen gemäß der Fig. 1 und 2 dadurch, daß das Telefon 10 an seiner Rückseite 12 mit einer Platte 17 versehen ist und das die Halterung 11 lediglich von einer zur Platte 17 komplementären Vertiefung 13 in einer Wand 19 gebildet wird. Diese Ausbildung stellt sicher, daß im getrennten Zustand von Halterung 11 und Telefon 10 keine verletzungsträchtigen Vorsprünge, etc. gegeben sind. Sowohl die erste Kante 14 als auch die zweite Kante der Vertiefung 13 ist mit einem Überwurf 15 versehen, wobei beide Überwürfe 15 in den lichten Querschnitt der Vertiefung 13 hineinragen. Auch die erste Kante 20 an der am Telefon 10 angeordneten Platte 17 ist mit einem Überwurf 15 versehen. An der zweite Kante 21 der Platte 17 ist das mit einer Fase 32 versehene untere Ende 26 des Schiebers 23 ausgebildet. Ist -so wie in Fig. 3 gezeigt- das Telefon 10 mit der Wand 19 verbunden, greift die Platte 17 in die Vertiefung 13 ein, wobei die Überwürfe 15 der ersten Kanten 14, 20 von Vertiefung 13 und Platte 17 in gegenseitigem Eingriff stehen und das untere Ende 26 des Schiebers 23 hinter dem Überwurf 15 der zweiten Kante 16 der Vertiefung 13 eingerastet ist. Soll ausgehend von Fig. 3 die Verbindung von Telefon 10 und Wand 19 aufgelöst werden, muß lediglich das mit dem Schieber 23 verbundene Griffstück 24 in Pfeilrichtung P2 (Fig.3) bewegt werden, wodurch das untere Ende 26 des Schiebers 23 den zwischen dem Überwurf 15 an der zweiten Kante 16 und der Wand 19 gebildeten Raum 33 verläßt. Hat der das untere Ende 26 des Schiebers 13 den Raum 33 verlassen kann das Telefon 10 durch eine Schwenkbewegung P4 von der Wand 19 entfernt und dann durch eine Bewegung in Pfeilrichtung P5 gänzlich von der Wand 19 getrennt werden. Die Verbindung zwischen Telefon 10 und Wand 13 erfolgt dergestalt, daß zunächst der Überwurf 15 an der ersten Kante 20 der Platte 17 mit der ersten Kante 14 in der Vertiefung 13 in körperlichen Kontakt gebracht wird und dann in einer Schenkbewegung entgegen der Pfeilrichtung P4 das Telefon 10 gegen die Wand 19 gedrückt wird. Kommt bei dieser Schwenkbewegung entgegen der Pfeilrichtung P4 der an der zweiten Kante 16 der Vertiefung 13 angeordnete Überwurf 15 mit der Fase 32 des unteren Endes 26 des Schiebers 23 in körperlichen Kontakt, wird -so wie schon im Zusammenhang mit Fig. 1 beschrieben- der Schieber 23 und mit im das Griffstück 24 in Pfeilrichtung P2 bewegt. Ist dann die Schwenkbewegung entgegen der Pfeilrichtung P4 abgeschlossen, wird das untere Ende 26 des Schiebers 23 in den Raum 33 gedrückt, da auch in diesem Ausführungsbeispiel bei der Bewegung des Schiebers 23 in Pfeilrichtung P2 eine Feder (in Fig. 3 nicht gezeigt) zusammengedrückt wurde.

Nur der Vollständigkeit halber sei darauf hingewiesen, daß im Ausführungsbeispiel gemäß Fig. 3 auch ein in Fig. 2 gezeigter Verschlußmechanismus verwendet werden kann, wenn lediglich eine Drückbewegung zur Auflösung der Verbindung von Telefon 10 und Halterung 11 erwünscht ist

Im Zusammenhang mit den Fig. 3, 4 und 5 soll nun ein Ausführungsbeispiel erläutert werden, bei dem die beweglichen Mittel 22 nicht auf eine der zweiten Kanten 16, 21, sondern auf zumindest eine Seitenfläche 27 der Platte 17 wirken.

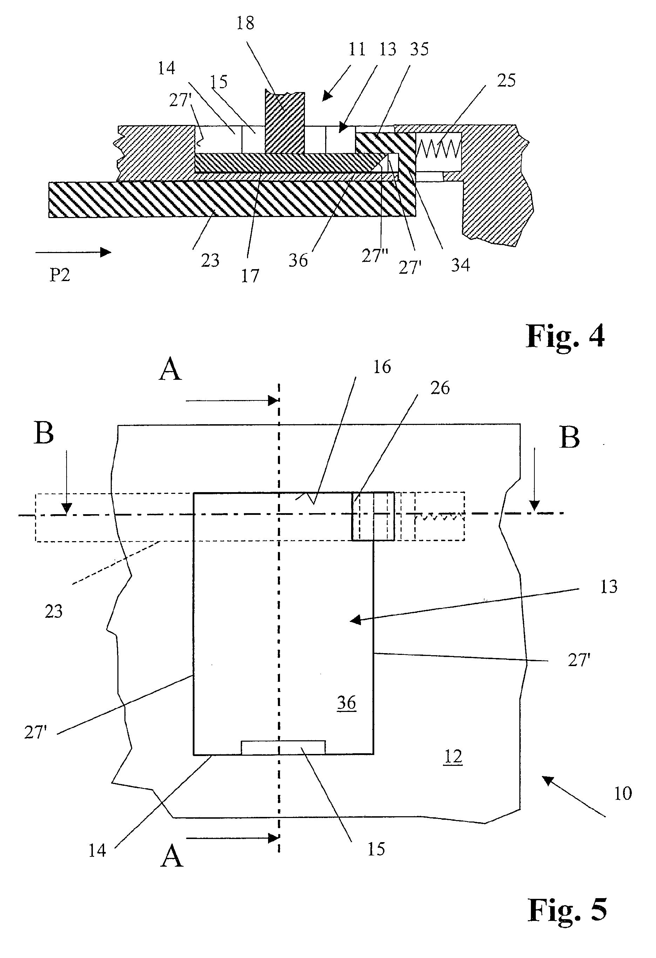

In Fig. 4 ist die Rückseite 12 eines Telefons 10 gezeigt, ohne daß diese mit einer Halterung 11 verbunden ist. Deutlich ist dieser Darstellung die in die Rückseite 12 des Telefons 10 eingelassene Vertiefung 13 sichtbar. Durch die Strichelung in Fig. 4 ist angedeutet, daß der Schieber 23 weitgehend innerhalb des Telefons 10 verläuft und lediglich mit seinem unteren Ende 26 sichtbar ist.

Nähere Einzelheiten hierzu sind Fig. 3 entnehmbar, welche einen Schnitt BB gemäß Fig. 4 zum Gegenstand. Der Schieber 23, welcher in Fig.3 einen rechteckigen Querschnitt hat und innerhalb des Telefons 10 verläuft, hat an seinem unteren Ende 26 einen rechtwinklig zur Längserstreckung des Schiebers 23 verlaufenden Steg 34 und einen an den Steg 34 angesetzten und parallel zum Schieber 23 verlaufenden Schenkel 35. Zwischen dem Steg 34 und der Wand 19, die vorliegend zum Gehäuse des Telefons 10 gehört, ist eine Feder 25 angeordnet. In die Vertiefung 13, welche von der Bodenplatte 36, zwei Wandflächen 27' und einer ersten und zweiten Kante 14,16 gebildet ist, ist die mit dem Steg 18 verbundene Platte 17 einer Halterung 11 einsetzt, wobei die erste Kante 20 der Platte 17 in den Abstand zwischen dem an der ersten Kante 14 der Vertiefung 13 befindlichen Überwurf 15 und der Bodenplatte 36 eingreift. In diesem verbundenen Zustand liegen die Seitenflächen 27 der Platte 17 an den Wandflächen 27' an. Auch wenn diese nicht aus Fig. 3 ersichtlich ist, sei darauf hingewiesen, daß in diesem Zustand auch die erste Kante 20 der Platte 17 an der ersten Kante 14 der Vertiefung 13 sowie die zweite Kante 21 der Platte 17 an der zweiten Kante 16 der Vertiefung 13 anliegen, um jegliche Bewegung der Platte 17 innerhalb der Vertiefung 13 auszuschließen.

Da Fig. 3 einen Schnitt BB gemäß Fig. 4 zeigt, wird deutlich, daß der Teil der Seitenfläche 27 der Platte 17, welcher zwischen dem Schenkel 35 und der Bodenplatte 36 angeordnet ist, mit einer Fase 27" versehen ist.

Soll das Telefon 10 mit der Halterung 11 verbunden werden, muß zunächst die erste Kante 20 der Platte 17 -so wie in Fig. 5 gezeigt- mit der ersten Kante 14 der Vertiefung 13 in körperlichen Kontakt gebracht werden. Die endgültige Verbindung zwischen Telefon 10 und Halterung 11 wird dadurch hergestellt, daß ausgehend von der in Fig. 5 gezeigten Stellung das Telefon 10 durch eine Klappbewegung in Pfeilrichtung P1 gegen die Halterung 11 gedrückt wird. Kommt während dieser Klappbewegung in Pfeilrichtung P1 (Fig. 3) die Fase 27" mit dem Schenkel 35 in Kontakte wird dieser und mit ihm er Schieber 23 in Pfeilrichtung P2 bewegt, womit gleichzeitig die Feder 25 zusammengedrückt wird. Ist die Bewegung in Pfeilrichtung P1 abgeschlossen und liegt die Platte 17 -so wie in Fig. 3 gezeigt- an der Bodenplatte 36 an, wird der Schieber 23 und mit ihm der Schenkel 35 durch die Expansion der Feder 25 entgegen der Pfeilrichtung P2 bewegt, womit sich der Schenkel 35 über die Platte 17 schiebt und diese in der Vertiefung 13 verriegelt.

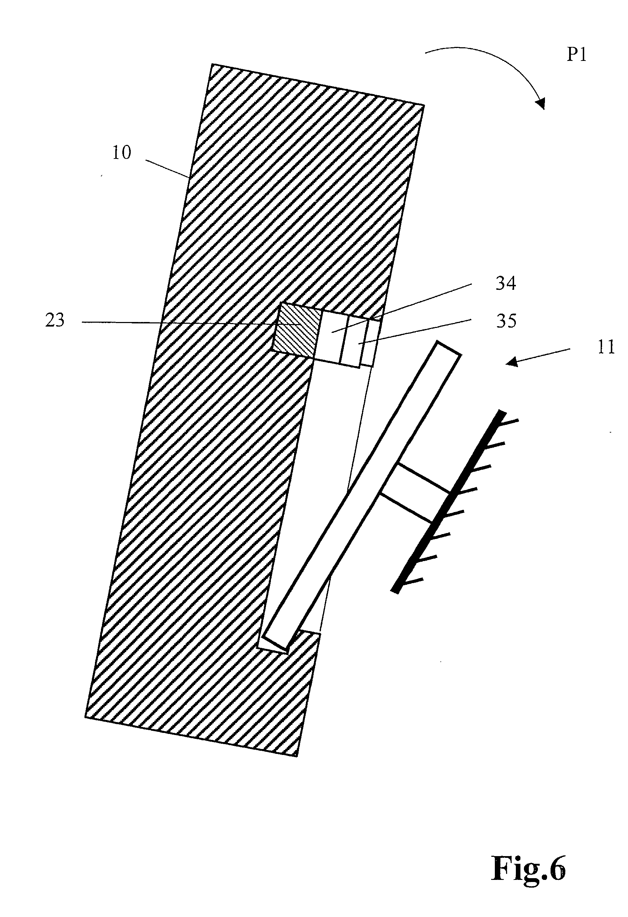

Soll die Verbindung zwischen Telefon 10 und Halterung 11 wieder aufgelöste werden, muß lediglich der Schieber 23 in Pfeilrichtung P2 bewegt werden, denn durch eine solche Bewegung wird der Schenkel 36 von der Platte 17 entfernt, womit gleichzeitig eine zur endgültigen Trennung notwendige Klappbewegung entgegen der Pfeilrichtung P1 (Fig. 6) ermöglicht wird.

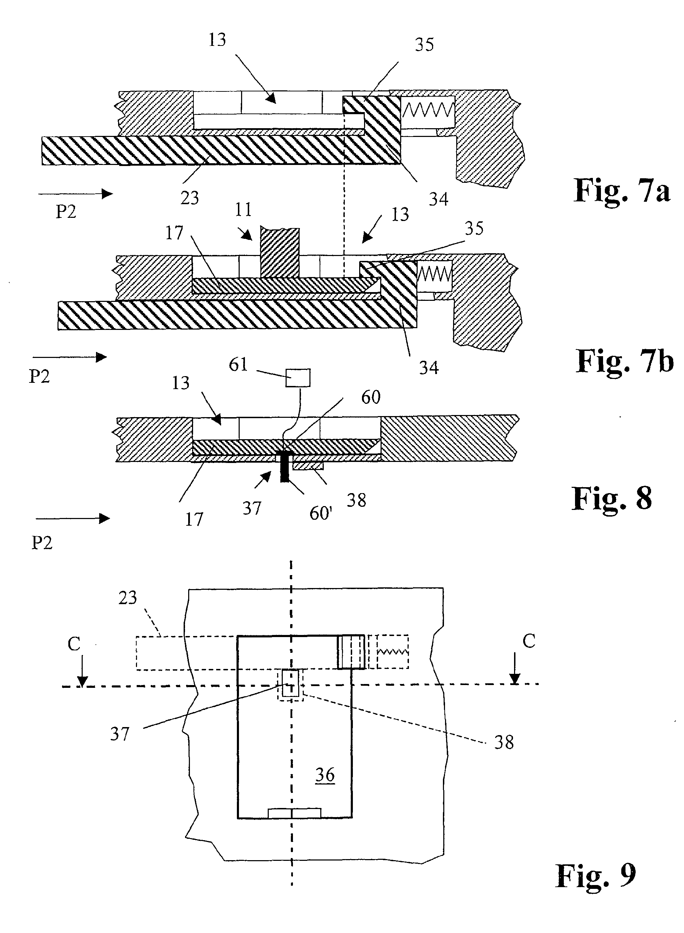

In Fig. 7a ist ein Schnitt AA gemäß Fig. 4 gezeigt, wobei keine Platte 17 in die Vertiefung 13 eingesetzt ist. Im Vergleich zu dem im Zusammenhang mit den Fig. 4 bis 6 erläuterten Ausführungsbeispiel ist jedoch in Fig. 7a und b der Steg 34 wesentlichen breiter ausgebildet. Wird nun -so wie in Fig. 7b gezeigt- eine Platte 17, die den Abmessungen der Platte 17 gemäß den Fig. 4 bis 6 entspricht, in die Vertiefung 13 eingesetzt, bewirkt der breitere Steg 34, daß der Schieber 23 nicht mehr seine in Fig. 7a gezeigte Ausgangslage erreichen kann, obwohl auch in diesem Ausführungsbeispiel der Schenkel 35 an der Platte 17 anliegt und diese arretiert.

In Fig. 9 ist -wie in Fig. 4- eine Rückansicht eines Telefons 10 gemäß den Fig. 7a, b und 8 veranschaulicht. Deutlich kann dieser Darstellung entnommen werden, daß die Bodenfläche 36 mit einem Fenster 37 versehen ist, welches von einer mit dem Schieber 23 verbundenen Teilstück 38 verschlossen ist, wenn keine Platte 17 in die Vertiefung 13 eingesetzt ist. Wird nun wie in Fig. 7b angegeben eine Platte 17 in die Vertiefung 13 eingebracht, wird -wie schon im Zusammenhang mit Fig. 3 erläutertder Schieber 23 durch den Kontakt der Fase 27" mit dem Schenkel 35 in Pfeilrichtung P2 bewegt. Durch diese Bewegung wird bei dem mit den Fig. 7 bis 9 dargestellten Ausführungsbeispiel auch das Teilstück 38 in Pfeilrichtung P2 bewegt und gibt daher das Fenster 37 frei. Da durch den breiteren Steg 35 bei eingelegter Platte 17 der Schieber 23 nicht mehr seine in Fig. 7a gezeigte Ausgangslage erreichen kann, bedeutet dies, daß das Fenster 37 geöffnet bleibt. Letzteres ist in Fig. 8 gezeigt, welche einen Schnitt CC gemäß Fig. 9, jedoch bei in der Vertiefung 13 eingelegter Platte 17 zum Gegenstand hat. Dieses geöffnete Fenster 37 zur elektrischen Kontaktierung des Telefons 10 mit der Platte 17 genutzt werden. In Fig. 8 ist zu diesem Zweck die Platte 17 mit einem Kontakt 60 versehen, auf dem ein durch das geöffnete Fenster 37 geführter Kontakt 60' aufsetzt ist. Vorteilhaft an dieser Ausbildung ist, daß der Kontakt 60' beim Trennen des Telefons 10 von der Halterung 11 automatisch durch das Teilstück 38 verdeckt wird.

Ist jedoch das Telefon 10 der Fig. 7a, 7b und 8 von der Halterung 11 getrennt, liegen die Kontakte 60 frei. Um auch für diese Kontakte 60 einen Berührungsschutz herzustellen, können diese Kontakte 60 beispielsweise von einer Klappe (nicht gezeigt) abgedeckt sein, die die Kontakte 60 erst dann freigibt, wenn das Telefon 10 mit der Halterung 11 verbunden wird. Wesentlich vorteilhafter ist es jedoch, die Kontakte 60 mit einer Überwachungsanordnung 61 zu verbinden, die die freiliegenden Kontakte 60 dann stromlos schaltet, wenn das Telefon 10 von der Halterung 11 getrennt wird bzw. die Kontakte 60 den körperlichen Kontakt zu den Kontakten 60' des Telefons 10 verlieren.

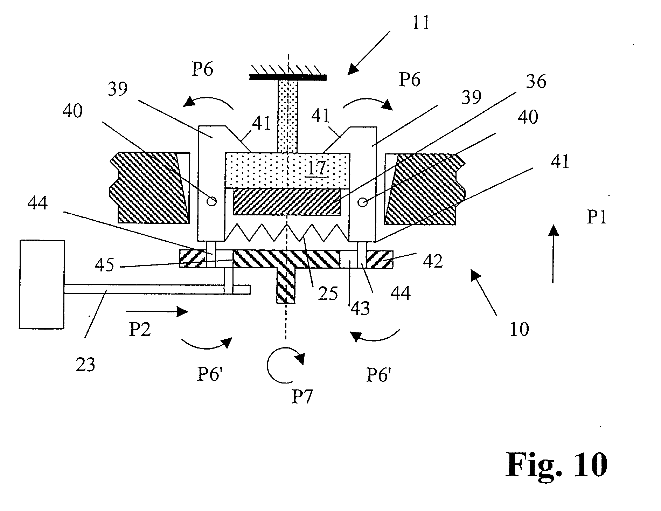

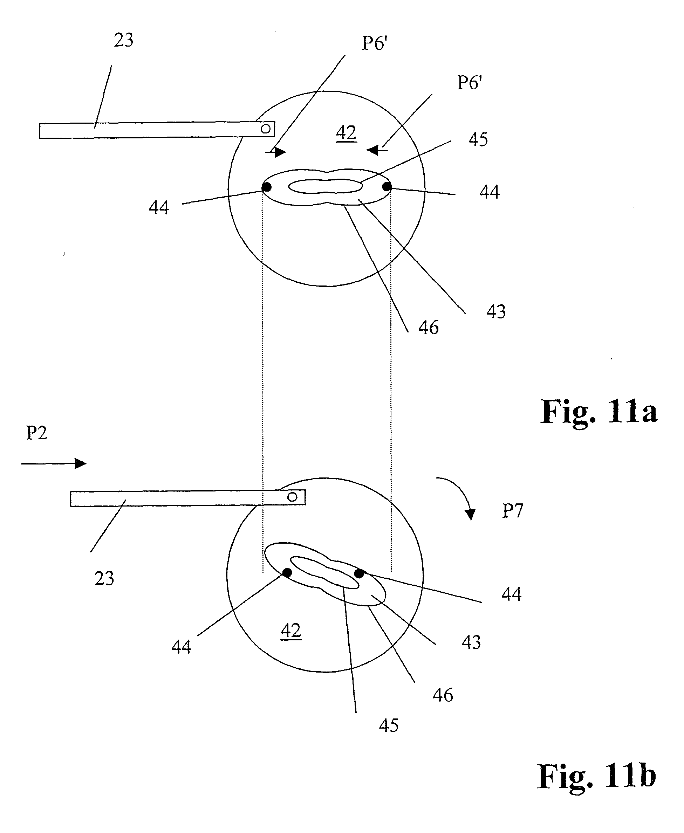

Im Zusammenhang mit den Fig. 10, 11a und 11b ist ein Verriegelungsmechanismus gezeigt, der im wesentlichen von zwei Rasthaken 39 gebildet wird. Deutlich ist der Darstellung gemäß Fig. 10 entnehmbar, daß im verbundenen Zustand von Halterung 11 und Telefon 10 die beiden Rasthaken 39 eine zur Halterung 11 gehörige Platte 17 umgreifen, wenn diese an der Bodenplatte 36 anliegt. Da die Rasthaken 39 auf einer Wellen 40 drehbar gelagert sind, können sie in Pfeilrichtung P6 ausweichen, wenn zum Verbinden des Telefons 10 mit der Halterung 11 das Telefon 10 in Pfeilrichtung P1 gegen die Halterung 11 gedrückt wird und die Fasen 41 der Rasthaken 39 mit der Platte 17 in körperlichen Kontakt kommen. Ist die Bewegung in Pfeilrichtung P1 abgeschlossen und liegt die Platte 17 -so wie in Fig. 10 gezeigt- an der Bodenplatte 36 an, werden die Rastenhaken 39 zur gegenseitigen Verriegelung von Telefon 10 und Halterung 11 mittel einer Bewegung entgegen der Pfeilrichtung P6 über die Platte 17 geführt. Die Bewegung entgegen der Pfeilrichtung P6 wird dadurch ermöglicht, daß die freien Enden 41 der beiden Rasthaken 39 -so wie in Fig. 10 gezeigt- über eine (Druck-) Feder 25 verbunden sind.

Um die Verbindung zwischen Telefon 10 und Halterung 11 wieder aufzulösen, ist unterhalb der Bodenplatte 36 eine drehbare Scheibe 42 angeordnet. Diese Scheibe 42 ist mit einem langgestreckten achtförmigen Durchbruch 43 versehen (siehe auch Fig. 11a und b), in welchen an den freien Enden 41 der Rasthaken 39 angebrachte Zapfen 44 eingreifen. Außerdem ist die Scheibe 42 mit einem Schieber 23 verbunden, der in Pfeilrichtung P2 beweglich ist.

Ist keine Platte 17 zwischen den Rasthaken 39 angeordnet, verläuft die größte Länge des langgestreckten achtförmigen Durchbruchs 43 zwischen den beiden Zapfen 44 (Fig. 10 und Fig. 11a). Da im übrigen der gegenseitige Abstand zwischen inneren und äußeren Rand 45, 46 größer ist als der Durchmesser der Zapfen 44, wird beim Verbindungen von Telefon 10 und Halterung 11 eine Bewegung der Zapfen 44 in Pfeilrichtung P6' (Fig.10 und 11a) durch den inneren Rand 45 des Durchbruchs 43 nicht behindert.

Wird nun zur Auslösung der Verbindung zwischen Telefon 10 und Halterung 11 der Schieber 23 in Pfeilrichtung P 2 bewegt, wird dadurch die Scheibe 42 in Pfeilrichtung P7 gedreht und nimmt dann eine Stellung ein, die in Fig. 11b gezeigt ist. Gleichzeitig mit dieser Drehung (P7) werden durch den Kontakt der Zapfen 44 mit dem äußeren Rand 46 des Durchbruchs 43 der Abstand zwischen den Zapfen 44 verringert und die Rasthaken 39 (Fig. 10) in Pfeilrichtung P6 bewegt. Diese über den Schieber 23 ausgelöste Bewegung der Rasthaken 39 macht es möglich, daß Telefon 10 durch eine Bewegung entgegen der Pfeilrichtung P1 von der Halterung zu entfernen.

Da gleichzeitig mit der erneuten Bewegung der Rasthaken 39 in Pfeilrichtung P6 auch die Feder 25 zusammengedrückt wurde, wird sichergestellt, wenn keine Pfeilrichtung P2 Kräfte mehr in Pfeilrichtung P2 auf den Schieber 23 wirken, daß durch die Expansion der Feder 25 sich wieder Verhältnisse einstellen, die in Fig. 11a veranschaulicht sind.

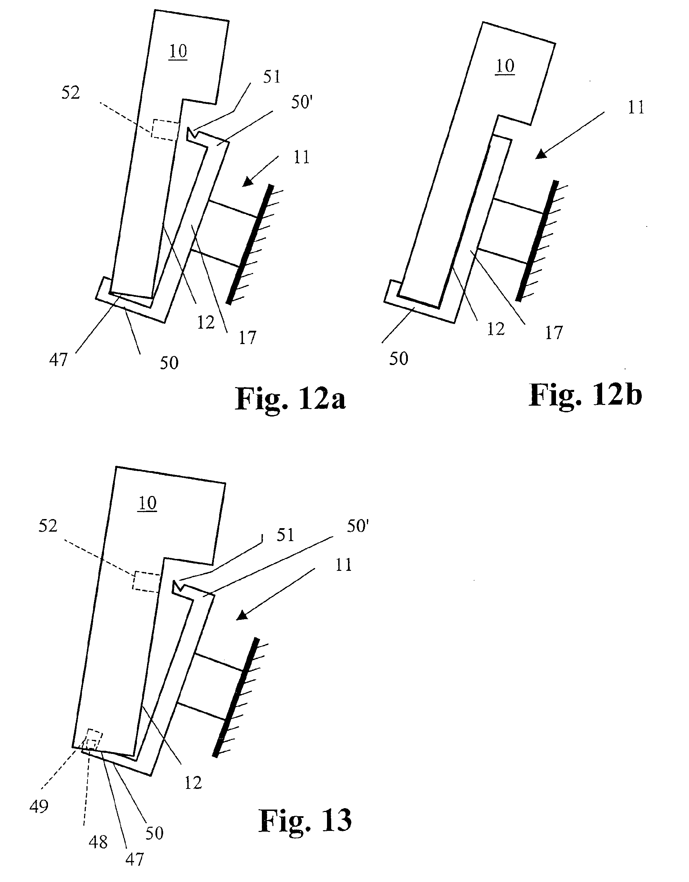

In den Fig. 12a und 12b ist eine Halterung 11 für ein Telefon 10 gezeigt, bei welcher die untere Seitenfläche 47 des Telefons 10 von einem hakenförmig ausgebildeten und mit der Platte 17 verbundenen Flachstück 50 umgriffen wird. Diese Ausbildung stellt sicher, daß, wenn der Verrieglungsmechanismus, der in den Fig. 12a und 12b nicht gezeigt ist, zur Trennung des Telefons 10 von der Halterung 11 auslöst wird, das Telefon 10 noch auf der Halterung 11 abgestützt bleibt. Einen ähnlichen Zweck verfolgt auch die Ausbildung der Halterung 11, die in Fig. 13 gezeigt ist. Im Gegensatz zu den Ausbildungen gemäß Fig. 12a und 12b greift dort die am Flachstück 50 angebrachte Ausformung 48 in eine an der unteren Seitenfläche 47 angebrachte Tasche 49 ein.

Außerdem ist den Fig. 12a und 13 entnehmbar, daß die Halterung 11 bzw. die Platte 17 mit einem weiteren Flachstück 50' versehen ist, daß einen Haken 51 aufweist. Dieses Flachstück 50' greift in einen an Telefon 10 ausgebildeten Einschnitt 52 ein, wenn das Telefon -so wie in Fig. 12b gezeigt- mit der Halterung 11 verbunden ist. Auch wenn in den Fig. 12a, 12b und 13 der Verriegelungsmechanismus nicht besonders gezeigt ist, ist doch offensichtlich, daß die an den Flachstücken 50' vorhandenen Haken 51 jeweils mit einem schon in den übrigen Figuren hinreichend erläuterten Schieber 23 zusammenwirken.

Abschließend sei darauf hingewiesen, daß der in dieser Anmeldung verwendete Begriff Telefon 10 auch sogenannte Hörer oder Handsets mit einschließt, und zwar unabhängig davon ob das jeweilige Telefon mit den übrigen Kommunikationskomponenten drahtgebunden oder drahtlos verbunden ist.

## Patentansprüche

1. Kombination bestehend
aus einem eine Rückseite 12 und wenigstens eine Seitenfläche 27 habenden Telefon 10 und
einer Halterung 11, wobei die Halterung 11 das Telefon 10 zumindest zeitweise haltert,
dadurch gekennzeichnet,
daß innerhalb des Telefons 10 ein von außerhalb des Telefons 10 betätigungsfähiges Mittel 23;24 angeordnet ist, das in seiner einen Stellung das Telefon 10 an der Halterung 11 arretiert und in seiner anderen Stellung die Trennung von Telefon 10 und Halterung 11 erlaubt.

2. Kombínation nach Anspruch 1
dadurch gekennzeichnet,
daß eine Platte 17 und eine zur Platte 17 komplementäre Vertiefung 13 vorhanden sind und
daß im verbundenen Zustand von Telefon 10 und Halterung 11 die Platte 17 in der Vertiefung 13 liegt.

3. Kombination nach Anspruch 2
dadurch gekennzeichnet,
daß die Vertiefung 13 und die Platte 17 jeweils eine erste Kante 14, 20 und eine der ersten Kante 14, 20 gegenüberliegende zweite Kante 16, 21 aufweisen,
daß wenigstens an einer der ersten Kanten 14., 20 ein Überwurf 15 ausgebildet ist und
daß im unmittelbaren räumlichen und körperlichen Zusammenhang mit einer der beiden zweiten Kanten 16, 21 das betätigungsfähige Mittel 23, 24 angeordnet ist.

4. Kombination nach Anspruch 3
dadurch gekennzeichnet;
daß diejenige zweite Kante16; 21, die im unmittelbaren räumlichen und körperlichen Zusammenhang mit dem betätigungsfähigen Mittel 23, 24 steht, Rastmittel 21a, vorhanden sind, die, wenn das Telefon 10 mit der Halterung 11 verbunden ist, mit dem betätigungsfähigen Mittel 23, 24 zur Arretierung des Telefons 10 zusammenwirken.

5. Kombination nach Anspruch 1
dadurch kennzeichnet,
daß die Halterung 11 im wesentlichen von einer Platte 17und wenigstens einem mit der Platte 17 verbundenen und rechtwinklig zu diesem verlaufenden Flachstück 50, 50' gebildet ist,
daß an wenigstens einem der Flachstücke 50' Rastmittel 51 vorgesehen sind, die mit dem betätigungsfähigen Mittel 23,24 zusammenwirken, wenn das Telefon 10 mit der Halterung 11 verbunden ist, und
daß im verbundenen Zustand von Telefon 10 und Halterung 11 die Rückseite 12 des Telefons 10 an der Platte 17 anliegt.

6. Kombination nach Anspruch 5
dadurch gekennzeichnet,
daß an der Rückseite 12 des Telefons 10 wenigstens ein Einschnitt 52 ausgebildet ist;
daß, wenn das Telefon 10 mit der Halterung 11 verbunden ist, wenigstens eines der Flachstücke 50' in einen der Einschnitte 52 eingreift, und
daß wenigstens einer der in einen Einschnitt 52 eingreifenden Flachstücke 50' mit Rastmitteln 51 versehen ist, die, wenn das Telefon 10 mit der Halterung 11 verbunden ist, mit dem betätigungsfähigen Mittel 23, 24 zusammenwirken.

7. Kombination nach einem der Ansprüche 1 bis 6
dadurch gekennzeichnet,
daß an der Halterung 11 und am Telefon 10 zueinander komplementäre elektrische Kontakte 60, 60' ausgebildet sind, die miteinander in körperlichem Kontakt stehen, wenn das Telefon 10 mit der Halterung 11verbunden ist.

8. Kombination nach Anspruch 7, soweit diese auf die Ansprüche 2 bis 4 bezogen ist,
dadurch gekennzeichnet,
daß die am Telefon 10 ausgebildeten Kontakte 60' im von der Halterung 11 getrennten Zustand vom betätigungsfähigen Mittel 23, 24, 38 verdeckt sind und erst dann von diesem freigegeben werden, wenn das betätigungsfähige Mittel 23, 24, 38 beim Verbinden des Telefons 10 mit der Halterung 11 von den Rastmitteln 27" bewegt wird.

9. Kombination nach einem der Ansprüche 1 bis 8
dadurch gekennzeichnet,
daß das betätigungsfähige Mittel 23, 24 ein mit einem Griffstück 24 verbundener Schieber 24 ist.
